# EUROPÄISCHE PATENTSCHRIFT

(11) **EP 2 784 463 B1**
(45) Veröffentlichungstag und Bekanntmachung des Hinweises auf die Patenterteilung: **18.10.2017**
(21) Anmeldenummer: 13160842.4
(22) Anmeldetag: 25.03.2013
(51) Int. Cl.: G01L 19/06, G01L 19/14

(54) **Druckmesszelle mit einer Einbauanordnung**
Pressure measurement cell with a mounting assembly
Cellule de mesure de pression dotée d'un dispositif d'intégration

(43) Veröffentlichungstag der Anmeldung: 01.10.2014
(73) Patentinhaber: VEGA Grieshaber KG, 77709 Wolfach (DE)
(72) Erfinder: Jacob, Jörn, 77709 Wolfach (DE)
(74) Vertreter: Westphal, Mussgnug & Partner Patentanwälte mbB

(56) Entgegenhaltungen:
- EP-A2- 0 757 237
- DE-A1-102007 042 976
- US-B1- 6 612 178

## Beschreibung

Die vorliegende Erfindung betrifft eine Druckmesszelle mit einer Einbauanordnung.

Aus dem Stand der Technik sind Druckmesszellen mit Einbauanordnungen bekannt.

Die EP 0 757 237 A2 offenbart einen Druckaufnehmer mit einem Sensorelement und einer an ihrem Rand gehalterten Sensormembran.

Die US 6,612,178 B1 offenbart einen anschlussfreien Drucksensor aus einem Halbleiterelement, der von einem zweiteiligen Metallgehäuse umgebenen ist.

Schließlich offenbart die DE 10 2007 042 976 A1 einen Drucksensor, umfassend ein Halbleiterelement mit einem Druckmessaufnehmer und einem Gehäuse, das das Halbleiterelement und den Druckmessaufnehmer einfasst, sowie ein Verfahren zur Herstellung des Drucksensors.

Im Stand der Technik ist es üblich, eine Druckmesszelle radial zu fassen und mittels radial vorgesehener Dichtungen gegenüber einer vorderseitig der Druckmesszelle befindlichen Prozessumgebung abzudichten. Insbesondere in der chemischen und pharmazeutischen Industrie, aber auch in der Lebensmittelindustrie, muss diesbezüglich ein großer Aufwand betrieben werden, um eine spaltfreie und hinreichend dichte Anbindung der Druckmesszelle an die Prozessumgebung zu gewährleisten. Es wird dabei als nachteilig empfunden, dass die aus dem Stand der Technik bekannten Anwendungsformen einerseits hinsichtlich ihrer Dichtigkeit aufgrund von thermischen Effekten sowie aufgrund einer Korrosion beziehungsweise Alterung des verwendeten Dichtungsmaterials nicht dauerhaft dicht ausgestaltet werden können. Es wird außerdem als nachteilig empfunden, dass die bislang bekannten Anordnungen nicht diffusionsdicht sind und damit eine Diffusion von Bestandteilen aus der Prozessumgebung in Richtung der Druckmesszelle nicht vermieden werden kann. Es ist außerdem bei dem aus dem Stand der Technik bekannten Anbindungsvarianten nur mit großem Aufwand möglich, eine spaltfreie Anbindung der Druckmesszelle an eine Prozessumgebung zu erreichen.

Es ist die Aufgabe der vorliegenden Erfindung, eine Druckmesszelle mit einer Einbauanordnung zur Verfügung zu stellen, die die Nachteile aus dem Stand der Technik nicht aufweist.

Diese Aufgabe wird durch eine Druckmesszelle mit einer Einbauanordnung mit den Merkmalen des Patentanspruchs 1 gelöst.

Vorteilhafte Weiterbildungen sind Gegenstand abhängiger Ansprüche.

Eine erfindungsgemäße Druckmesszelle weist eine Einbauanordnung mit einem metallischen Boden und einer umlaufenden metallischen Wandung auf, wobei die Druckmesszelle vorderseitig eine Messmembran aufweist, die bodenseitig in der Einbauanordnung angeordnet ist.

Durch eine Anordnung der Druckmesszelle in einer Einbauanordnung mit einem metallischen Boden und einer umlaufenden metallischen Wandung, d. h. in einer topfförmig ausgestalteten Einbauanordnung, wobei die Druckmesszelle und die Einbauanordnung mit der Bodenseite der Einbauanordnung zum Prozess hin orientiert sind, wird eine diffusionsdichte Einheit geschaffen, die dichtungsfrei in einem Prozessanschluss oder zu einer Prozessumgebung hin anordenbar beziehungsweise befestigbar ist. Eine dichtungsfreie Befestigung der Druckmesszelle mit der Einbauanordnung in dem Prozessanschluss beziehungsweise zu der Prozessumgebung hin kann beispielsweise durch ein Einschweißen der metallischen Einbauanordnung in eine entsprechende Ausnehmung einer Wandung der Prozessumgebung erreicht werden. Durch ein Einschweißen und anschließendes Schleifen der Schweißnaht kann eine absolut plane, dichtungsfreie, diffusionsdichte und spaltfreie Anordnung geschaffen werden, die insbesondere bei einem Einsatz in Prozessen der chemischen, pharmazeutischen oder Lebensmittelindustrie vorteilhaft ist.

Durch eine hinreichend dünne Ausgestaltung des Bodens der Einbauanordnung werden Druckkräfte, die auf diesen von der Prozessumgebung her wirken, annähernd unverändert auf die bodenseitig in der Einbauanordnung angeordnete Messmembran der Druckmesszelle übertragen, sodass eine Druckmessung weiterhin problemlos möglich ist.

Eine Anordnung der Druckmesszelle in der Einbauanordnung kann besonders einfach durch eine erfindungsgemäß wenigstens vorderseitig vorgesehene, bevorzugt vollflächig ausgebildete Klebeschicht zwischen der Druckmesszelle und dem Boden der Einbauanordnung erreicht werden.

Durch eine Verklebung der Druckmesszelle mit der Einbauanordnung, insbesondere im Bereich zwischen der Messmembran und dem Boden wird eine spannungsfreie Lagerung der Druckmesszelle innerhalb der Einbauanordnung gewährleistet, sodass insbesondere thermisch induzierte Messfehler aufgrund von unterschiedlichen Ausdehnungskoeffizienten zwischen der Druckmesszelle und der Einbauanordnung vermieden werden können. Bei einer hinreichend dünnen Ausgestaltung der Klebeschicht werden außerdem auf den Boden der Einbauanordnung wirkende Druckkräfte auch über die Klebeschicht hinweg ohne signifikante Verluste auf die Messmembran der Druckmesszelle übertragen, sodass weiterhin eine Druckmessung problemlos möglich ist.

Bevorzugt sind eine Dicke des Bodens und eine Dicke der Klebeschicht derart aufeinander und auf die verwendete Druckmesszelle abgestimmt, dass eine Druckmessung weiterhin problemlos möglich ist.

In einer weiteren Ausgestaltungsform besteht die Klebeschicht aus einem Silikonkleber. Durch die Verwendung eines hochelastischen Silikonklebers wird einerseits die spannungsfreie Lagerung der Druckmesszelle innerhalb der Einbauanordnung weiter unterstützt und andererseits bei einer hinreichend dünnen Klebeschicht eine verlustfreie Druckübertragung auf die Messmembran der Druckmesszelle gewährleistet.

Die Einbauanordnung ist erfindungsgemäß einstückig aus Metall, bevorzugt aus Titan, gefertigt.

Eine einstückige Ausbildung der Einbauanordnung weist den Vorteil auf, dass die Einbauanordnung selbst spannungsfrei, d. h. insbesondere ohne durch Fügestellen, beispielsweise Schweißnähte, eingebrachte Spannungen insbesondere im Bereich des Bodens ausgebildet sein kann. Eine Ausbildung aus Titan bringt außerdem den Vorteil, dass dieses einen zu einem keramischen Material, das bei Druckmesszellen häufig zum Einsatz kommt, nur gering abweichenden Wärmeausdehnungskoeffizienten aufweist, sodass durch diese Materialkombination thermische Spannungen vermieden werden können.

Die Verwendung von Titan ist außerdem vorteilhaft, da Titan gegenüber einer Vielzahl technischer Prozesse inert ist und außerdem als Diffusionssperre wirkt.

Um eine zusätzliche mechanische Verbesserung der vorliegenden Anordnung zu erreichen, kann diese wenigstens vorderseitig, d. h. an der dem Prozess zugewandten Seite der Befestigungsanordnung, eine Hartstoffbeschichtung und/oder eine Antihaftbeschichtung aufweisen. Eine solche Hartstoffbeschichtung kann beispielsweise aus Siliziumcarbid oder DLC (Diamond-Like-Carbon) bestehen.

Wie bereits erwähnt, kann die Druckmesszelle vorzugsweise als Keramikdruckmesszelle ausgebildet sein, wobei dies insbesondere in Kombination mit einer Einbauanordnung aus Titan vorteilhaft ist.

Bei anderen Materialkombinationen sind die Einbauanordnung und die Druckmesszelle bevorzugt derart aufeinander abgestimmt, dass diese einen thermischen Ausdehnungskoeffizienten aufweisen, der sich um höchstens 15 % voneinander unterscheidet. Auf diese Weise werden thermisch induzierte Messfehler weitgehend ausgeschlossen.

Eine besonders einfache Einsetzbarkeit der Druckmesszelle mit Einbauanordnung kann erreicht werden, wenn die Einbauanordnung in einem Prozessanschluss befestigt, bevorzugt mit dem Prozessanschluss verschweißt, ist. Durch eine Befestigung der Einbauanordnung in einem Prozessanschluss wird eine Verwendung mit üblichen Prozessanbindungen, beispielsweise üblicherweise verwendeten Gewinden, möglich, wobei ein Aufbringen eines Gewindes auf die Befestigungsanordnung nicht notwendig ist, wodurch insbesondere Spannungen im Bereich des Bodens vermieden werden können. Insbesondere ist es außerdem nicht notwendig, Einbauanordnungen mit verschiedenen, an den jeweilig verwendeten Gerätetyp angepassten Außendurchmessern vorzuhalten, da eine Anpassung über den Prozessanschluss erfolgt.

Ein Anschweißen der Einbauanordnung in den Prozessanschluss kann vorderseitig durch ein anschließendes Verschleifen der Schweißnaht wiederum zu einer absolut spaltfreien und planen Anordnung führen, sodass ein Einsatz insbesondere im Bereich der chemischen, pharmazeutischen und Lebensmittelindustrie besonders geeignet ist.

In der erfinderischen Ausgestaltungsform hat der Boden der Anordnung eine Dicke von 0,03 mm bis 0,1 mm, bevorzugt etwa 0,05 mm Die Klebeschicht weist außerdem eine Dicke von 0,005 mm bis 0,15 mm, bevorzugt etwa 0,02 mm auf.

Die Wandung der Einbauanordnung weist bevorzugt einen Durchmesser auf, der den Durchmesser der Druckmesszelle um höchstens 5 mm übersteigt, sodass der Boden der Einbauanordnung bei einer Druckeinwirkung eine hinreichende Durchbiegung erfährt, die auf die Messmembran der Druckmesszelle übertragen wird.

Durch eine Ausbildung des Bodens mit einer Dicke von etwa 0,05 mm und der Klebeschicht mit einer Dicke von etwa 0,02 mm wird bei üblichen Druckmesszellen für einen Druckbereich von 25 mbar bis 60 bar und einem Durchmesser der Druckmesszelle von 28 mm eine hinreichend gute Druckübertragung über den Boden und die Klebeschicht auf die Messmembran der Druckmesszelle erreicht, sodass ein Einsatz der vorgeschlagenen Anordnung problemlos möglich ist.

Eine besonders gute Befestigung der Druckmesszelle in der Einbauanordnung wird erreicht, wenn außerdem zwischen der Druckmesszelle und der umlaufenden metallischen Wandung eine umlaufende Verklebung angeordnet ist. Eine umlaufende, insbesondere seitliche Verklebung der Druckmesszelle mit der Einbauanordnung hat den Vorteil, dass durch eine zusätzliche Fixierung im Randbereich eine stabilere Anordnung sowie eine bessere Übertragung der vorderseitig wirkenden Druckkräfte erzielbar ist.

Um thermische Verspannungen zwischen der Einbauanordnung und dem Prozessanschluss zu minimieren und außerdem, um eine inerte Gesamtanordnung zur Verfügung zu stellen, kann es sinnvoll sein, wenn der Prozessanschluss bevorzugt aus Titan gefertigt ist. Es wird auf diese Weise eine zum Prozess hin vollständig aus Titan bestehende und damit inerte und diffusionsdichte Anordnung geschaffen, die bei ansonsten kritischen Prozessen gut zum Einsatz kommen kann.

Um eine gegen äußere Krafteinwirkungen geschützte Lagerung der Druckmesszelle zu erreichen und gleichzeitig eine gut handhabbare Einheit zu schaffen, kann vorzugsweise rückseitig der Einbauanordnung ein Aufnahmering mit einer umlaufenden Stufe angeordnet sein, der die Druckmesszelle rückseitig in Radialrichtung übergreift. Es wird auf diese Weise eine Anordnung erreicht, bei der die Druckmesszelle mechanisch stabil innerhalb der Kombination aus Einbauanordnung und Aufnahmering gelagert und gleichzeitig vollständig vor äußeren mechanischen Einflüssen geschützt ist. Wie zuvor mehrfach erwähnt, kann auch der Aufnahmering zur Vermeidung thermischer Spannungen zwischen den verwendeten Materialien bevorzugt aus Metall, besonders bevorzugt aus Titan, gefertigt sein.

Um eine nach außen hin als eine Einheit erscheinende Anordnung zu schaffen, ist der Aufnahmering bevorzugt mit der Einbauanordnung fest verbunden, was bevorzugt durch Verschweißen erfolgen kann.

Um eine spannungsfreie Lagerung der Druckmesszelle innerhalb der Kombination aus Einbauanordnung und Aufnahmering zu gewährleisten, ist es sinnvoll, wenn zwischen der umlaufenden Stufe und der Druckmesszelle eine rückseitige Verklebung angeordnet ist. Eine solche rückseitige Verklebung, die bevorzugt wie auch die Klebeschicht und die umlaufende Verklebung mit einem hochelastischen Silikonkleber ausgeführt ist, gewährleistet eine vollständig spannungsfreie Lagerung der Druckmesszelle.

Die vorliegende Erfindung wird nachfolgend anhand eines Ausführungsbeispieles unter Bezugnahme auf die beigefügten Figuren eingehend erläutert. Es zeigen:
- Fig. 1: einen Längsschnitt durch ein Ausführungsbeispiel der erfindungsgemäßen Anordnung und
- Fig. 2: eine Detailvergrößerung des Längsschnittes aus Figur 1.

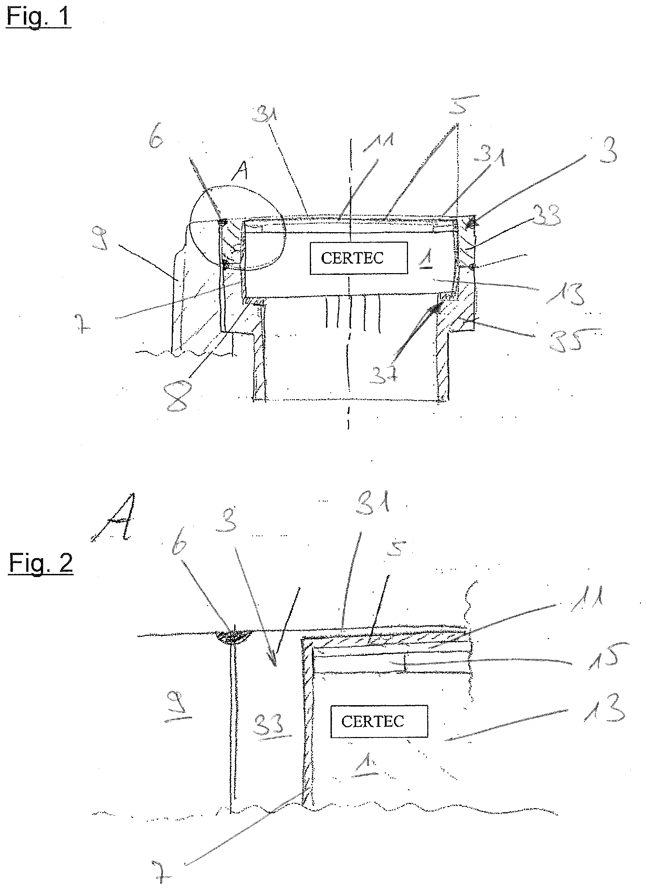

Figur 1 zeigt einen Längsschnitt durch ein Ausführungsbeispiel einer Druckmesszelle 1, die in einer Einbauanordnung 3 angeordnet ist. Die Druckmesszelle 1 ist als im Wesentlichen zylindrische Kapsel ausgebildet, die in dem in Figur 1 dargestellten Längsschnitt einen rechteckigen Querschnitt aufweist. An einem Messzellenkörper 13 ist vorderseitig über eine umlaufende Glasnaht 15 eine Messmembran 11 angeordnet, die über beispielsweise zwischen der Messmembran 11 und dem Grundkörper 13 durch gegenüberliegende Metallisierungen gebildete Kondensatoren eine Messung einer auf die Messmembran 11 einwirkenden Kraft, beispielsweise eines Druckes, ermöglicht.

Die Messzelle ist über eine vollflächig zwischen der Messmembran 11 und einem Boden 31 der Einbauanordnung 3 angeordnete Klebeschicht 5 in der Einbauanordnung 3 befestigt. Die Einbauanordnung 3 weist außerdem eine umlaufende Wandung 33 auf, sodass die Einbauanordnung 3 insgesamt topfförmig ausgestaltet ist. Es ist in diesem Zusammenhang darauf hinzuweisen, dass der Boden 31 sowie die Klebeschicht 5 mit äußert geringer Dicke ausgebildet sind. Der Boden 31 weist beispielsweise eine Dicke von 0,05 mm und die Klebeschicht 5 eine Dicke von 0,02 mm auf. Die Klebeschicht 5 kann dabei beispielsweise aus einem hochelastischen Silikonkleber gebildet sein, sodass eine spannungsfreie Lagerung der Druckmesszelle 1 in der Einbauanordnung 3 erreicht wird. Die Einbauanordnung 3 ist rückseitig mit einem Aufnahmering 35 verschweißt, der mit einer umlaufenden nach innen springenden Stufe 37 ausgebildet ist, die die Druckmesszelle 1 rückseitig in Radialrichtung übergreift. Zwischen der Wandung 33 der Einbauanordnung 3 und der Druckmesszelle 1 ist eine umlaufende Verklebung 7 angeordnet, die die Druckmesszelle 1 auch in Radialrichtung spannungsfrei in der Einbauanordnung 3 haltert. Die umlaufende Verklebung 7 besteht vorzugsweise aus dem gleichen hochviskosen Silikonkleber, aus dem auch die Klebeschicht 5 besteht. Es ist außerdem zwischen dem Aufnahmering 35, insbesondere zwischen dessen radial zur Druckmesszelle 1 verlaufenden Abschnitt und der umlaufenden Stufe 37, die die Druckmesszelle 1 rückseitig in Radialrichtung übergreift, eine rückseitige Verklebung 8 vorgesehen. Durch diese rückseitige Verklebung 8 wird gewährleistet, dass die Druckmesszelle 1 auch in Axialrichtung druckfrei gelagert ist.

Der Aufnahmering 35 ist mit der Einbauanordnung 3 umlaufend verschweißt, sodass nach einem Verschleifen der Schweißnaht eine separat handhabbare Anordnung gebildet ist.

Vorderseitig ist die Einbauanordnung 3 im vorliegenden Ausführungsbeispiel umlaufend in einen Prozessanschluss 9, der beispielsweise ein Außengewinde aufweisen kann, eingeschweißt. Der Prozessanschluss 9 ist korrespondierend zu der Kombination aus Einbauanordnung 3 und Aufnahmering 35 ausgestaltet und vorderseitig umlaufend mit der Einbauanordnung 3 verschweißt. Nach einem Schleifen einer Schweißnaht 6 ist damit eine vorderseitig spaltfreie, absolut plane und diffusionsdichte Ankopplung an eine Prozessumgebung gewährleistet.

Figur 2 zeigt eine Ausschnittsvergrößerung aus Figur 1.

Die in Figur 2 dargestellte Ausschnittsvergrößerung zeigt besonders gut die zwischen dem Boden 31 und der Messmembran 11 angeordnete Klebeschicht 5, die sich übergangslos in der seitlich umlaufenden Verklebung 7 zwischen der Wandung 33 und dem Messzellenkörper 13 der Druckmesszelle 1 fortsetzt. Dadurch, dass der Boden 31 und die Klebeschicht 5, wie im vorliegenden Ausführungsbeispiel gezeigt, in einer Dicke ausgeführt sind, die in etwa der Dicke der Messmembran 11 entspricht, ist eine hervorragende Übertragung von auf den Boden 31 vorderseitig einwirkenden Druckkräften über die Klebeschicht 5 auf die Messmembran 11 gewährleistet. Insbesondere wird dadurch, dass der Boden 31 einen Radius aufweist, der nur geringfügig größer als ein Außendurchmesser der Druckmesszelle 1 ist, gewährleistet, dass eine Durchbiegung des Bodens 31 insbesondere in einem Mittelbereich, d. h. in einem von der umlaufenden Wandung 33 beabstandeten Bereich, unmittelbar auf die Messmembran 11 übertragen wird.

In der in Figur 2 dargestellten Ausschnittsvergrößerung ist außerdem die umlaufende Schweißnaht 6 zwischen der Einbauanordnung 3 und dem Prozessanschluss 9 besonders gut zu erkennen. Wie aus Figur 2 hervorgeht, ist die Schweißnaht 6 vorderseitig geschliffen, sodass eine spalt- und erhebungsfreie Stirnseite der Anordnung erreicht wird. Dies ist besonders günstig für Anwendungen im Lebensmittelbereich, da bei derartigen Anwendungen Ablagerungen in sich ergebenden Spalten vermieden werden müssen.

In einer bevorzugten Ausgestaltungsvariante sind die Einbauanordnung 3, der Aufnahmering 35 und der Prozessanschluss 9 allesamt aus Titan gefertigt. Eine Verwendung von Titan als Werkstoff gewährleistet einerseits eine hohe Diffusionsdichtigkeit der vorgeschlagenen Anordnung und andererseits eine hohe chemische Inaktivität (inert) der Anordnung gegenüber vielen Prozessen.

### Bezugszeichenliste

- 1: Druckmesszelle
- 3: Einbauanordnung
- 5: Klebeschicht
- 7: Verklebung
- 8: rückseitige Verklebung
- 9: Prozessabschluss

- 11: Messmembran
- 13: Messzellenkörper
- 15: Glasnaht

- 31: Boden
- 33: Wandung
- 35: Aufnahmering
- 37: umlaufende Stufe

## Patentansprüche

1. Druckmesszelle (1) aufweisend eine Einbauanordnung (3) mit einem metallischen Boden und einer umlaufenden metallischen Wandung (33), wobei die Druckmesszelle (1) vorderseitig eine Messmembran (11) aufweist, die bodenseitig in der Einbauanordnung (3) angeordnet ist,
**dadurch gekennzeichnet, dass** die Einbauanordnung (3) topfförmig ausgestaltet ist und einstückig aus einem Metall gefertigt ist, wobei der Boden (31) eine Dicke von 0,03 mm bis 0,1 mm aufweist, und wobei wenigstens vorderseitig eine Klebeschicht (5) zwischen der Druckmesszelle (1) und dem Boden (31) angeordnet ist.

2. Druckmesszelle (1) mit einer Einbauanordnung (3) gemäß Anspruch 1,
**dadurch gekennzeichnet, dass** die Klebeschicht (5) zwischen der Druckmesszelle (1) und dem Boden (31) vollflächig angeordnet ist.

3. Druckmesszelle (1) mit einer Einbauanordnung (3) gemäß einem der vorhergehenden Ansprüche,
**dadurch gekennzeichnet, dass** die Klebeschicht (5) aus einem Silikonkleber besteht.

4. Druckmesszelle (1) mit einer Einbauanordnung (3) gemäß einem der vorhergehenden Ansprüche,
**dadurch gekennzeichnet, dass** die Einbauanordnung (3) aus Titan, gefertigt ist.

5. Druckmesszelle (1) mit einer Einbauanordnung (3) gemäß einem der vorhergehenden Ansprüche,
**dadurch gekennzeichnet, dass** die Einbauanordnung (3) wenigstens vorderseitig eine Hartstoffbeschichtung und / oder eine Antihaftbeschichtung aufweist.

6. Druckmesszelle (1) mit einer Einbauanordnung (3) gemäß Anspruch 5,
**dadurch gekennzeichnet, dass** die Hartstoffbeschichtung aus Siliziumkarbid oder Diamond-Like-Carbon besteht.

7. Druckmesszelle (1) mit einer Einbauanordnung (3) gemäß einem der vorhergehenden Ansprüche,
**dadurch gekennzeichnet, dass** die Druckmesszelle (1) als Keramikdruckmesszelle ausgebildet ist.

8. Druckmesszelle (1) mit einer Einbauanordnung (3) gemäß einem der vorhergehenden Ansprüche,
**dadurch gekennzeichnet, dass** die Einbauanordnung (3) mit einem Prozessanschluss (9) verschweißt ist.

9. Druckmesszelle (1) mit einer Einbauanordnung (3) gemäß einem der vorhergehenden Ansprüche,
**dadurch gekennzeichnet, dass** der Boden (31) eine Dicke von etwa 0,05 mm und / oder die Klebeschicht (5) eine Dicke von 0,005 mm bis 0,15 mm, bevorzugt etwa 0,02 mm aufweist.

10. Druckmesszelle (1) mit einer Einbauanordnung (3) gemäß einem der vorhergehenden Ansprüche,
**dadurch gekennzeichnet, dass** zwischen der Wandung (33) und der Druckmesszelle (1) eine umlaufende Verklebung (7) angeordnet ist.

11. Druckmesszelle (1) mit einer Einbauanordnung (3) gemäß einem der vorhergehenden Ansprüche 8-10,
**dadurch gekennzeichnet, dass** der Prozessanschluss (9) aus Titan gefertigt ist.

12. Druckmesszelle (1) mit einer Einbauanordnung (3) gemäß einem der vorhergehenden Ansprüche
**dadurch gekennzeichnet, dass** rückseitig der Einbauanordnung (3) ein Aufnahmering (35) mit einer umlaufenden Stufe (37) angeordnet ist, der die Druckmesszelle (1) rückseitig in Radialrichtung übergreift.

13. Druckmesszelle (1) mit einer Einbauanordnung (3) gemäß Anspruch 12,
**dadurch gekennzeichnet, dass** der Aufnahmering (35) aus Titan, gefertigt ist.

14. Druckmesszelle (1) mit einer Einbauanordnung (3) gemäß einem der Ansprüche 12 oder 13,
**dadurch gekennzeichnet, dass** der Aufnahmering (35) und die Einbauanordnung (3) fest miteinander verschweißt, sind.

15. Druckmesszelle (1) mit einer Einbauanordnung (3) gemäß einem der Ansprüche 12-14,
**dadurch gekennzeichnet, dass** zwischen der umlaufenden Stufe (37) und der Druckmesszelle (1) eine rückseitige Verklebung (8) angeordnet ist.

## Claims

1. Pressure measuring cell (1) comprising an installation assembly (3) with a metal base and a circumferential metal wall (33), wherein the pressure measuring cell (1) has at the front side a measuring membrane (11) which is arranged at the base in the installation assembly (3), **characterised in that** the installation assembly (3) is configured in a cup shape and is produced in one piece from a metal, wherein the base (31) has a thickness of 0.03 mm to 0.1 mm, and wherein at least at the front side an adhesive layer (5) is arranged between the pressure measurement cell (1) and the base (31).

2. Pressure measuring cell (1) with an installation assembly (3) according to claim 1, **characterised in that** the adhesive layer (5) is arranged over the entire area between the pressure measuring cell (1) and the base (31).

3. Pressure measuring cell (1) with an installation assembly (3) according to one of the preceding claims, **characterised in that** the adhesive layer (5) consists of a silicon adhesive.

4. Pressure measuring cell (1) with an installation assembly (3) according to one of the preceding claims, **characterised in that** the installation assembly (3) is produced from titanium.

5. Pressure measuring cell (1) with an installation assembly (3) according to one of the preceding claims, **characterised in that** the installation assembly (3) has a hard material coating and a non-stick coating at least at the front side.

6. Pressure measuring cell (1) with an installation assembly (3) according to claim 5, **characterised in that** the hard material coating is made of silicon carbide or diamond-like carbon.

7. Pressure measuring cell (1) with an installation assembly (3) according to one of the preceding claims, **characterised in that** the pressure measuring cell (1) is designed as a ceramic pressure measuring cell.

8. Pressure measuring cell (1) with an installation assembly (3) according to one of the preceding claims, **characterised in that** the installation assembly (3) is welded to a process connection (9).

9. Pressure measuring cell (1) with an installation assembly (3) according to one of the preceding claims, **characterised in that** the base (31) has a thickness of approximately 0.05 mm, and/or the adhesive layer (5) has a thickness of 0.005 mm to 0.15 mm, preferably approximately 0.02 mm.

10. Pressure measuring cell (1) with an installation assembly (3) according to one of the preceding claims, **characterised in that** a circumferential adhesion (7) is arranged between the wall (33) and the pressure measuring cell (1).

11. Pressure measuring cell (1) with an installation assembly (3) according to one of the preceding claims 8-10, **characterised in that** the process connection (9) is produced from titanium.

12. Pressure measuring cell (1) with an installation assembly (3) according to one of the preceding claims, **characterised in that** at the rear of the installation assembly (3) a receiving ring (35) is arranged which has a circumferential step and encompasses the pressure measuring cell at the rear in the radial direction.

13. Pressure measuring cell (1) with an installation assembly (3) according to claim 12, **characterised in that** the receiving ring (35) is produced from titanium.

14. Pressure measuring cell (1) with an installation assembly (3) according to one of claims 12 or 13, **characterised in that** the receiving ring (35) and the installation assembly (3) are fixedly welded to one another.

15. Pressure measuring cell (1) with an installation assembly (3) according to one of claims 12-14, **characterised in that** a rear adhesion (8) is arranged between the circumferential step (37) and the pressure measuring cell (1).

## Revendications

1. Cellule de mesure (1) comportant un dispositif de montage (3) avec un fond métallique et une paroi métallique périphérique (33), la cellule de mesure de pression (1) ayant sur son côté avant une membrane de mesure (11) placée dans le fond du dispositif de montage (3),
**caractérisée en ce que**
le dispositif de montage (3) est en forme de pot, en une seule pièce, en métal, le fond (31) ayant une épaisseur comprise entre 0,03 mm - 0,1 mm et au moins sur le côté avant, une couche de colle (5) est prévue entre la cellule de mesure de pression (1) et le fond (31).

2. Cellule de mesure de pression (1) comportant un dispositif de montage (3) selon la revendication 1,
**caractérisée en ce que**
la couche de colle (5) est prévue sur toute la surface entre la cellule de mesure de pression (1) et le fond (31).

3. Cellule de mesure de pression (1) comportant un dispositif de montage (3) selon l'une des revendications précédentes,
**caractérisée en ce que**
la couche de colle (5) est une colle de silicone.

4. Cellule de mesure de pression (1) comportant un dispositif de montage (3) selon l'une des revendications précédentes,
**caractérisée en ce que**
le dispositif de montage (3) est en titane.

5. Cellule de mesure de pression (1) comportant un dispositif de montage (3) selon l'une des revendications précédentes,
**caractérisée en ce que**
le dispositif de montage (3) comporte au moins sur son côté avant une couche de matière dure et/ou une couche anti-adhésive.

6. Cellule de mesure de pression (1) comportant un dispositif de montage (3) selon la revendication 5,
**caractérisée en ce que**
le revêtement de matière dure est du carbure de silicium ou du carbone diamant.

7. Cellule de mesure de pression (1) comportant un dispositif de montage (3) selon l'une des revendications précédentes,
**caractérisée en ce que**
la cellule de mesure de pression (1) est réalisée sous la forme d'une cellule de mesure de pression en céramique.

8. Cellule de mesure de pression (1) comportant un dispositif de montage (3) selon l'une des revendications précédentes,
**caractérisée en ce que**
le dispositif de montage (3) est soudé à un branchement de procédé (9).

9. Cellule de mesure de pression (1) comportant un dispositif de montage (3) selon l'une des revendications précédentes,
**caractérisée en ce que**
le fond (31) a une épaisseur d'environ 0,05 mm et/ou la couche de colle (5) a une épaisseur de 0,005 mm jusqu'à 0,15 mm et de préférence de l'ordre de 0,02 mm.

10. Cellule de mesure de pression (1) comportant un dispositif de montage (3) selon l'une des revendications précédentes,
**caractérisée par**
un collage périphérique (7) entre la paroi (33) et la cellule de mesure de pression (1).

11. Cellule de mesure de pression (1) comportant un dispositif de montage (3) selon l'une des revendications précédentes 8 à 10,
**caractérisée en ce que**
le branchement de procédé (9) est en titane.

12. Cellule de mesure de pression (1) comportant un dispositif de montage (3) selon l'une des revendications précédentes,
**caractérisée en ce que**
le côté arrière du dispositif de montage (3) comporte un anneau de réception (35) avec un gradin périphérique (37) qui dépasse le côté arrière de la cellule de mesure (1) dans la direction radiale.

13. Cellule de mesure de pression (1) comportant un dispositif de montage (3) selon la revendication 12,
**caractérisée en ce que**
la bague de réception (35) est en titane.

14. Cellule de mesure de pression (1) comportant un dispositif de montage (3) selon l'une des revendications 12 ou 13,
**caractérisée en ce que**
la bague de réception (35) et le dispositif de montage (3) sont soudés solidairement l'un à l'autre.

15. Cellule de mesure de pression (1) comportant un dispositif de montage (3) selon l'une des revendications 12 à 14,
**caractérisée par**
un collage (8) côté arrière entre le gradin périphérique (37) et la cellule de mesure (1).
